# EUROPÄISCHE PATENTSCHRIFT

(11) **EP 3 521 213 B1**
(45) Veröffentlichungstag und Bekanntmachung des Hinweises auf die Patenterteilung: **09.04.2025**
(21) Anmeldenummer: 19153000.5
(22) Anmeldetag: 22.01.2019
(51) Int. Cl.: B65G 17/20, B65G 19/02, B65G 9/00, B65G 47/38

(54) **TRAGVORRICHTUNG ZUM AUFNEHMEN VON WAREN**
SUPPORT DEVICE FOR HOLDING GOODS
DISPOSITIF PORTEUR DESTINÉ À RECEVOIR DES MARCHANDISES

(30) Priorität: 05.02.2018 DE 102018201675
(43) Veröffentlichungstag der Anmeldung: 07.08.2019
(73) Patentinhaber: Dürkopp Fördertechnik GmbH, 33719 Bielefeld (DE)
(72) Erfinder: Wend, Michael, 33619 Bielefeld (DE); Johannesmann, Thomas, 33719 Bielefeld (DE)
(74) Vertreter: Rau, Schneck & Hübner Patentanwälte Rechtsanwälte PartGmbB

(56) Entgegenhaltungen:
- EP-A1- 3 147 240
- WO-A1-96/29256
- US-A- 3 464 733
- US-A- 3 629 905

## Beschreibung

Die Erfindung betrifft eine Tragvorrichtung zum Aufnehmen von Waren. Aus der EP 3 231 741 A1 ist eine Tragvorrichtung zum Aufnehmen von Waren mit einer Tragwand und einer Verschlusseinrichtung bekannt. Die Tragwand umfasst eine Vorderwand und eine Rückwand und ist zwischen einem Verschlusszustand, in dem ein Tragvolumen zum Aufnehmen der Waren zumindest teilweise nach vorne, nach unten und nach hinten begrenzt ist, und einem Offenzustand, in dem das Tragvolumen nach unten freigegeben ist, anordenbar. Die Verschlusseinrichtung weist zwei Schließmittel zum reversiblen Verbinden der Vorderwand mit der Rückwand in dem Verschlusszustand auf. Die beiden Schließmittel sind an der Tragwand angebracht. Beim Freigeben der Waren aus der Tragvorrichtung können insbesondere Waren großer Abmessungen zwischen der Tragwand und einem der beiden Schließmittel verkanten. Hierdurch kann es zu Stillstandszeiten kommen und die Waren können entfernt von dem beabsichtigten Entladeort aus der Tragvorrichtung herausfallen und dabei verloren gehen oder beschädigt werden.

Tragvorrichtungen zum Aufnehmen vor Waren mit einer Aufhängeinrichtung zum Anbinden an ein Schienensystem sind ferner bekannt aus der US 3,464,733 A und der EP 3 147 240 A1. US 3,464,733 A offenbart eine Tragvorrichtung nach dem Oberbegriff des Anspruchs 1.

Der Erfindung liegt die Aufgabe zugrunde, eine Tragvorrichtung zum Aufnehmen von Waren derart zu verbessern, dass diese im Einsatz robust ist und besonders wirtschaftlich betrieben werden kann.

Diese Aufgabe wird durch eine Tragvorrichtung mit den Merkmalen des Anspruchs 1 gelöst. Der Kern der Erfindung besteht darin, dass die Verschlusseinrichtung mindestens ein Schließmittel zum reversiblen Verbinden der Vorderwand mit der Rückwand in dem Verschlusszustand aufweist, wobei das mindestens eine Schließmittel in dem Offenzustand beabstandet zu der Tragwand anordenbar ist. Das mindestens eine Schließmittel ist in dem Offenzustand relativ zu der Tragwand beweglich gelagert. Das mindestens eine Schließmittel kann den aus der Tragwand herausfallenden Waren somit ausweichen. Ein Verkanten der Waren zwischen der Tragwand und dem mindestens einen Schließmittel ist somit ausgeschlossen. Die Tragvorrichtung ist insbesondere zur Verwendung in einer Hängeförderanlage ausgebildet. Insbesondere kann die Tragvorrichtung Bestandteil einer Hängeförderanlage sein. Die Hängeförderanlage kann ein Schienensystem zum, insbesondere hängenden, Anbringen und Fördern von Tragvorrichtungen aufweisen. Die Tragvorrichtungen sind jeweils mittels eines Rolladapters in dem Schienensystem geführt verlagerbar. Insbesondere kann die Hängeförderanlage einen Antrieb aufweisen, um die Rolladapter entlang des Schienensystems anzutreiben. Die Tragvorrichtung kann somit besonders zuverlässig und wirtschaftlich betrieben werden.

Die Tragvorrichtung ist besonders zuverlässig aus dem Offenzustand in den Verschlusszustand überführbar, wobei die Waren verliersicher in dem Tragvolumen gehalten werden können. Vorzugsweise ist die Vorder-Schließleiste an einem Vorder-Lagermittel angebracht und/oder die Hinter-Schließleiste ist an einem Hinter-Lagermittel angebracht. Das Vorder-Lagermittel kann mit der Vorderwand verbunden sein und das Hinter-Lagermittel kann mit der Rückwand verbunden sein. Zum Lösen der Verbindung zwischen der Vorder-Schließleiste und der Hinter-Schließleiste können diese aus dem Verschlusszustand relativ zueinander schräg, insbesondere senkrecht, zu einer Längserstreckung der Tragvorrichtung verschiebbar ausgebildet sein.

Die Tragvorrichtung gewährleistet die zuverlässige Freigabe der Waren aus dem Tragvolumen. Zur Verbindung der Vorder-Schließleiste mit der Hinter-Schließleiste können diese ein Schließleisten-Verbindungsmittel aufweisen. Das Schließleisten-Verbindungsmittel ist vorzugsweise außerhalb eines seitlichen Randes der Tragwand angeordnet. Vorteilhaft wird hierdurch erreicht, dass die zur Verbindung der Vorder-Schließleiste und der Hinter-Schließleiste dienenden Verbindungsmittel, insbesondere das Schließleisten-Verbindungsmittel, außerhalb eines von den Waren beim Herausfallen überstrichenen Volumens angeordnet sind. Ein Verklemmen und/oder Verhaken der Waren wird somit zuverlässig verhindert.

Eine derartige Tragvorrichtung ist besonders einfach aus dem Offenzustand in den Verschlusszustand verlagerbar und unkompliziert in der Handhabung. Das mindestens eine Schließmittel ist an mindestens einem, insbesondere mindestens zwei, insbesondere mindestens drei, insbesondere mindestens fünf, Lagermitteln angebracht sein. Vorzugsweise ist das mindestens eine Schließmittel an jeweils genau einem Lagermittel angebracht. Das mindestens eine Lagermittel kann unmittelbar an der Tragwand angebracht sein, insbesondere mit dieser vernäht und/oder verklebt und/oder verschweißt, sein. Vorzugsweise erstreckt sich das mindestens eine Lagermittel vollständig auf einer dem Tragvolumen abgewandten Seite der Tragwand. Das mindestens eine Lagermittel ist insbesondere aus dem gleichen Material hergestellt wie die Tragwand.

Vorzugsweise ist das mindestens eine Schließmittel kraftschlüssig, insbesondere mittels einer Klemmverbindung, und/oder formschlüssig und/oder stoffschlüssig mit dem mindestens einen Lagermittel verbunden. Durch die Anbringung des mindestens einen Schließmittels an der Tragvorrichtung ist dieses besonders einfach handhabbar. Die mit der Anbindung des mindesten einen Schließmittels über das mindestens eine Lagermittel an die Tragvorrichtung einhergehende Beschränkung der Verlagerbarkeit des Schließmittels relativ zu der Tragwand gewährleistet eine einfachere, insbesondere automatisierte, Überführung der Tragwand aus dem Offenzustand in den Verschlusszustand.

Die Tragvorrichtung weist eine Aufhängeeinrichtung zur Anbindung an ein Schienensystem, insbesondere der Hängeförderanlage, auf. Vorzugsweise ist die Tragvorrichtung eine Transporttasche der Hängeförderanlage. Vorzugsweise umfasst die Aufhängeeinrichtung einen Transporthaken zur Befestigung an dem Rolladapter des Schienensystems. Die Tragvorrichtung kann einen Beladerahmen aufweisen. Der Beladerahmen kann, insbesondere starr, mit der Aufhängeeinrichtung verbunden sein. Vorzugsweise sind die Waren durch den Beladerahmen in das Tragvolumen einbringbar. Die Tragwand ist, insbesondere über den Beladrahmen, an der Aufhängeeinrichtung angebracht. Vorteilhaft wird hierdurch erreicht, dass die Waren besonders einfach, insbesondere automatisiert, in das Tragvolumen eingebracht werden können.

Die Tragwand, insbesondere die Vorderwand und/oder die Rückwand, kann zumindest bereichsweise starr ausgebildet sein. Der starr ausgebildete Bereich der Tragwand, insbesondere der Vorderwand und/oder der Rückwand, kann starr mit der Aufhängeeinrichtung, insbesondere mit dem Beladerahmen, verbunden sein. Durch die erhöhte Stabilität der Tragwand ist die Tragvorrichtung besonders präzise entlang des Schienensystems führbar.

Gemäß einem Aspekt der Erfindung sind die Vorderwand und die Rückwand in dem Verschlusszustand, insbesondere in einer Seitenansicht, U-förmig ausgebildet. Die Vorderwand und/oder die Rückwand können hierzu als ebene, flexible, insbesondere biegeweiche, Flächenwaren ausgebildet sein. Vorzugsweise sind die Vorderwand und/oder die Rückwand in dem Verschlusszustand und/oder in dem Offenzustand höchstens einfach gekrümmt ausgebildet. Das Tragvolumen ist in einer Draufsicht vorzugsweise rechteckförmig ausgebildet. Ein Bodenbereich des Tragvolumens weist vorzugsweise ein V-förmiges oder U-förmiges, insbesondere sich horizontal erstreckendes, Rinnenprofil auf. Quaderförmige Transportgüter, insbesondere Kartonagen, können somit besonders zuverlässig und platzsparend in der Tragvorrichtung aufgenommen werden. Vorzugsweise ist die Tragwand, insbesondere die Vorderwand und/oder die Rückwand, zumindest bereichsweise formflexibel ausgebildet. Die Tragwand kann hierzu ein textiles und/oder ein gummielastisches Material aufweisen. Vorzugsweise ist die Tragwand biegeweich ausgebildet. Die Tragwand kann sich somit besonders gut an die individuelle Geometrie der Waren anpassen. Die Waren werden somit besonders verliersicher in dem Tragvolumen gehalten.

Gemäß einem Aspekt der Erfindung besteht die Tragwand vollständig aus einem textilen Material. Eine derartige Tragvorrichtung gewährleistet den verliersicheren Transport der Waren. Durch die Ausbildung der Tragwand, insbesondere der Vorderwand und der Rückwand, aus dem textilen Material, werden die Waren, unabhängig von ihrer individuellen Geometrie oder der Geometrie der Verpackung, besonders sicher und fest von der Tragwand umschlossen. Die Tragwand, insbesondere die Vorderwand und/oder die Rückwand, kann, insbesondere auf Seiten des Tragvolumens, eine Gummierung zur Erhöhung eines Reibwerts zwischen den Waren und der Tragwand aufweisen.

Vorzugsweise ist das mindestens eine Schließmittel derart ausgebildet, dass es zum reversiblen Verbinden der Vorderwand mit der Rückwand an der Tragwand anliegt. Zum Verbinden der Vorderwand mit der Rückwand kann das mindestens eine Schließmittel eine kraftschlüssige Verbindung, insbesondere eine Klemmverbindung, und/oder eine formschlüssige Verbindung, insbesondere eine stiftförmige Verbindung und/oder eine Nut-Feder-Verbindung und/oder eine Kederverbindung und/oder eine Schließriegel-Verbindung aufweisen. Vorzugsweise kontaktiert die Vorderwand in dem Verschlusszustand die Rückwand. Alternativ kann die Vorderwand in dem Verschlusszustand auch beabstandet zu der Rückwand angeordnet sein.

Das mindestens eine Schließmittel kann formstarr ausgebildet sein. Vorzugsweise ist das mindestens eine Schließmittel in einem Bereich formstarr ausgebildet, in dem es mit der Tragwand zusammenwirkt, insbesondere in Kontakt gelangt. Das mindestens eine Schließmittel gewährleistet somit eine besonders robuste Verbindung der Vorderwand mit der Schließwand.

Vorzugsweise ist das mindestens eine, insbesondere sämtliche, Schließmittel in dem Offenzustand in seiner Position und/oder Orientierung relativ zu der Tragwand veränderbar. Das mindestens eine Schließmittel kann beispielsweise lösbar an der Tragwand angebracht sein. Insbesondere kann das mindestens eine Schließmittel als separate Klemmvorrichtung zum Verschluss der Tragwand an dieser anordenbar sein.

Gemäß einem Aspekt der Erfindung ist das mindestens eine Schließmittel in dem Offenzustand mit einem Abstand von mindestens 5 mm zu der Tragwand anordenbar. Eine derartige Tragvorrichtung gewährleistet die Freigabe der Waren besonders zuverlässig. Das mindestens eine Schließmittel ist hierdurch derart von der Tragwand beabstandet anordenbar, dass ein Verkanten der Waren zwischen der Tragwand und dem mindestens einen Schließmittel besonders zuverlässig verhindert werden kann. Das mindestens eine Schließmittel kann insbesondere von einer unten angeordneten Öffnung der Tragvorrichtung im Offenzustand beabstandet angeordnet sein. Dadurch ist ausgeschlossen, dass das Schließmittel unbeabsichtigt die Öffnung blockiert und somit ein selbsttätiges, schwerkraftbedingtes Herausfallen der Waren aus der Tragvorrichtung behindert sein könnte. Vorzugsweise weist das mindestens eine Lagermittel eine Lagerlänge zwischen dem mindestens einen Schließmittel, insbesondere der mindestens einen Schließkante, und der Anbringung an der Tragwand von mindestens 5 mm, insbesondere mindestens 10 mm, insbesondere mindestens 50 mm, insbesondere mindestens 100 mm, insbesondere mindestens 250 mm, insbesondere mindestens 500 mm, auf. Eine zum Verlagern des mindestens einen Schließmittels relativ zu der Tragwand notwendige Kraft ist bei der entsprechenden Lagerlänge, insbesondere bei einer zumindest bereichsweise formflexiblen Ausbildung des mindestens einen Lagermittels, besonders gering. Durch das mindestens eine Lagermittel kann das mindestens eine Schließmittel insbesondere im Wesentlichen querkraftfrei von der Tragwand weg verlagert werden. Eine selbsttätig aus der Tragvorrichtung nach unten herausfallende Ware kann das mindestens eine Schließmittel im Wesentlichen gegenkraftfrei auslenken.

Die Verschlusseinrichtung kann ein Betätigungsmittel aufweisen zum Verlagern des Schließmittels aus einer Verschlussstellung in eine Offenstellung, in der eine Verbindung der Vorderwand mit der Rückwand gelöst ist. Vorzugsweise umfasst das Betätigungsmittel ein Auslöseelement, welches beabstandet zu dem mindestens einen Schließmittel angeordnet ist. Das Auslöseelement ist vorzugsweise an der Aufhängeeinrichtung angebracht. Das Betätigungsmittel kann somit besonders einfach, insbesondere im Bereich des Schienensystems, betätigt werden. Ein Ausschwenken der Tragvorrichtung beim Betätigen des Auslösemittels wird aufgrund der Anordnung im Bereich der Aufhängeeinrichtung zuverlässig verhindert.

Gemäß einem Aspekt der Erfindung weist die Verschlusseinrichtung zwei formschlüssig miteinander verbindbare Schließmittel auf. Die Schließmittel können zur formschlüssigen Verbindung einen Riegelmechanismus umfassen. Vorzugsweise weist der Riegelmechanismus mindestens einen drehbar gelagerten Schließriegel auf. Das mindestens eine Schließmittel erlaubt somit eine besonders zuverlässige Verbindung der Vorderwand mit der Rückwand.

Eine Tragvorrichtung nach Anspruch 2 gewährleistet zuverlässig die Freigabe der Waren und ist damit im Betrieb besonders robust. Durch die formflexible Ausbildung des mindestens einen Lagermittels ist das mindestens eine Schließmittel in dem Offenzustand relativ zu der Tragwand begrenzt verlagerbar. Das mindestens eine Lagermittel kann biegeweich und/oder dehnbar ausgebildet sein.

Vorzugsweise weist das mindestens eine Lagermittel ein textiles Material auf. Das mindestens eine Lagermittel kann auch vollständig aus einem textilen Material bestehen. Hierdurch wird sichergestellt, dass zur Verlagerung des mindestens einen Schließmittels relativ zu der Tragwand bereits geringe Kräfte ausreichend sind. Die Waren können somit zuverlässig aus der Tragvorrichtung freigegeben werden.

Das mindestens eine Lagermittel kann ein Federmittel, insbesondere ein Federblech, insbesondere eine Blattfeder, aufweisen. Vorzugsweise ist das mindestens ein Lagermittel derart ausgebildet, dass das mindestens eine Federmittel das Verlagern der Tragwand aus dem Verschlusszustand in den Offenzustand unterstützt. Insbesondere ist das mindestens eine Federmittel in dem Verschlusszustand vorgespannt angeordnet. Insbesondere kann das mindestens eine Federmittel derart ausgebildet sein, dass es in dem Offenzustand eine beabstandete Anordnung des mindestens einen Schließmittels zu der Tragwand bewirkt.

Eine Tragvorrichtung gemäß Anspruch 3 ist besonders einfach, insbesondere automatisierbar, aus dem Verschlusszustand in den Offenzustand verlagerbar. Das mindestens eine Lagermittel kann mit der Tragwand kraftschlüssig und/oder formschlüssig, insbesondere vernäht, und/oder stoffschlüssig, insbesondere verschweißt und/oder verklebt, sein. Durch die Anbringung des mindestens einen Lagermittels an der Tragwand ist die Anordnung des mindestens einen Schließmittels relativ zu der Tragwand zumindest teilweise bestimmt, wodurch die Tragwand besonders zuverlässig und wiederholgenau in den Verschlusszustand verlagerbar ist.

Das mindestens eine Lagermittel kann Verbindungsschlaufen aufweisen, durch die hindurch sich der Beladerahmen zumindest abschnittsweise erstreckt. Vorzugsweise weist auch die Tragwand derartige Verbindungsschlaufen zur Anbringung an dem Beladerahmen auf. Die Tragwand und das mindestens eine Lagermittel können versetzt zueinander angeordnete Verbindungsschlaufen zur Anbringung an dem Beladerahmen aufweisen.

Eine Tragvorrichtung nach Anspruch 4 gewährleistet zuverlässig die Freigabe der Waren aus dem Tragvolumen, wobei die Tragwand besonders einfach, insbesondere automatisierbar, aus dem Offenzustand in den Verschlusszustand verlagerbar ist. Das mindestens eine Schließmittel weist je eine Schließkante auf, über die es in dem Verschlusszustand mit der Tragwand zusammenwirkt. Vorzugsweise ist die Schließkante im Wesentlichen gerade ausgebildet. Durch die Anbringung des mindestens einen Lagermittels oberhalb der jeweiligen Schließkante des mindestens einen an dem mindestens einen Lagermittel angebrachten Schließmittels ist das mindestens eine Schließmittel besonders leicht relativ zu der Tragwand verlagerbar. Dies gilt insbesondere für eine biegeweiche Ausführung des mindestens einen Lagermittels. Durch die Anbringung des mindestens einen Lagermittels oberhalb der mindestens einen Schließkante wird zudem gewährleistet, dass das mindestens eine Schließmittel schwerkraftbedingt eine feste Position relativ zu der Tragwand einnimmt, sofern keine weiteren Kräfte auf dieses wirken. Die Tragwand, insbesondere das mindestens eine Schließmittel kann somit besonders zuverlässig und wiederholgenau in den Verschlusszustand überführt werden.

Eine Tragvorrichtung gemäß Anspruch 5 ist besonders zuverlässig aus dem Offenzustand in den Verschlusszustand verlagerbar. Dadurch, dass die Tragwand die mindestens eine Schließkante des mindestens einen Schließmittels nach unten überragt, kann der Verschluss der Tragwand, insbesondere das Verklemmen der Vorderwand und der Rückwand zwischen einer Vorder-Schließleiste und einer Hinter-Schließleiste, besonders zuverlässig erfolgen. Vorzugsweise weist die Tragwand, insbesondere die Vorderwand und/oder die Rückwand, einen Überstandsabschnitt auf, welcher die mindestens eine Schließkante nach unten überragt. Die Tragwand überragt die mindestens eine Schließkante vorzugsweise in dem Offenzustand nach unten.

Eine Tragvorrichtung nach Anspruch 6 gewährleistet ein verliersicheres Halten der Waren in dem Tragvolumen. Vorzugsweise umfasst die Tragwand an beiden Seiten mindestens eine, insbesondere mindestens zwei, insbesondere mindestens drei, Seitenwände. Vorzugsweise ist die mindestens eine Seitenwand zumindest bereichsweise oder vollständig formflexibel, insbesondere biegeweich und/oder elastisch und/oder faltbar, ausgebildet. Die mindestens eine Seitenwand kann aus einem textilen Material hergestellt sein. Vorzugsweise weist die mindestens eine Seitenwand ein gummielastisches Material auf. Die mindestens eine Seitenwand kann das mindestens eine Schließmittel, insbesondere die mindestens eine Schließkante nach unten überragen. Vorzugsweise ist die mindestens eine Seitenwand an der Vorderwand und/oder an der Rückwand angebracht, insbesondere damit vernäht und/oder verklebt und/oder verschweißt. Ein seitliches Herausfallen der Waren aus dem Tragvolumen wird somit zuverlässig verhindert.

Eine Tragvorrichtung nach Anspruch 7 ist besonders robust und zuverlässig entleerbar. Der schlauchförmige Innensack ist in dem Offenzustand vorzugsweise nach oben und nach unten geöffnet. Insbesondere kann der schlauchförmige Innensack durch die Vorderwand, die Rückwand und die zwei Seitenwände ausgebildet sein. In einer Draufsicht ist der Innensack vorzugsweise rechteckförmig. Der Innensack kann einen Überstandsabschnitt aufweisen, welcher die Verschlusseinrichtung, insbesondere das mindestens eine Schließmittel, insbesondere mindestens eine Schließkante, nach unten überragt. Vorzugsweise ist das mindestens eine Schließmittel außerhalb des Innensacks angeordnet. Vorteilhaft wird dadurch gewährleist, dass die Verschlusseinrichtung ein Entleeren der Tragvorrichtung nicht stört. Insbesondere schützt der Innensack die Ware beim Herausfallen aus der Tragvorrichtung. Ein unmittelbarer Kontakt der Ware mit dem mindestens einen Schließmittel ist durch den Innensack verhindert. In dem Offenzustand können Waren besonders zuverlässig aus der Tragvorrichtung nach unten freigegeben werden.

In eine Tragvorrichtung gemäß Anspruch 8 können die Waren zuverlässig und automatisierbar eingebracht werden. Vorzugsweise ist der Beladerahmen starr mit der Aufhängeeinrichtung verbunden. Der Beladerahmen kann mit der Aufhängeeinrichtung gelenkig verbunden sein. Zwischen dem Beladerahmen und der Aufhängeeinrichtung kann ein Federelement zur schrägen Anstellung des Beladerahmens relativ zu der Vertikalebene angeordnet sein. Vorzugsweise ist der Beladerahmen, insbesondere im hängenden Zustand und/oder in dem Offenzustand der Tragvorrichtung, in einem Winkel von mindestens 10°, insbesondere mindestens 20°, insbesondere mindestens 30°, insbesondere mindestens 45°, zu der Vertikalebene angeordnet. Ein von dem Beladerahmen erwirkter Abstand zwischen der Vorderwand und der Rückwand beträgt, insbesondere in dem Offenzustand, vorzugsweise mindestens 10 mm, insbesondere mindestens 20 mm, insbesondere mindestens 50 mm, insbesondere mindestens 100 mm.

Eine Tragvorrichtung gemäß Anspruch 9 gewährleistet ein verliersicheres Halten der Waren in dem Tragvolumen und ist platzsparend verstaubar. Die mindestens eine Faltung ist vorzugsweise nach innen, in Richtung des Tragvolumens orientiert. Vorzugsweise ist die mindestens eine Faltung in vertikaler Richtung orientiert. Die mindestens eine Seitenwand kann mindestens eine, insbesondere mindestens zwei, insbesondere mindestens drei, insbesondere mindestens fünf, Faltungen aufweisen. Die mindestens eine Faltung kann beispielsweise durch die Anbringung der mindestens einen Seitenwand an die Vorderwand und/oder die Rückwand vordefiniert sein. Durch ein flächenparalleles Vernähen und/oder Verkleben und/oder Verschweißen der mindestens einen Seitenwand mit der Vorderwand und/oder der Rückwand kann die nach innen gerichtete Faltung erzwungen werden. Eine Vernähung und/oder Verklebung und/oder Verschweißung innerhalb der mindestens einen Seitenwand ermöglicht das Einstellen der Anzahl und/oder der Orientierung zusätzlicher Faltungen.

Weitere Merkmale, Vorteile und Einzelheiten der Erfindung ergeben sich aus der nachfolgenden Beschreibung eines Ausführungsbeispiels anhand der Figuren. Es zeigen:
- Fig. 1: eine perspektivische Darstellung einer Tragvorrichtung von schräg vorne in einem Verschlusszustand,
- Fig. 2: eine Seitenansicht der Tragvorrichtung in Fig. 1 in dem Verschlusszustand,
- Fig. 3: eine Rückansicht der Tragvorrichtung in Fig. 1 in dem Verschlusszustand,
- Fig. 4: eine perspektivische Darstellung der Tragvorrichtung von schräg hinten, wobei die Tragvorrichtung in einem Offenzustand dargestellt ist, und
- Fig. 5: eine Seitenansicht der Tragvorrichtung in Fig. 4 in dem Offenzustand.

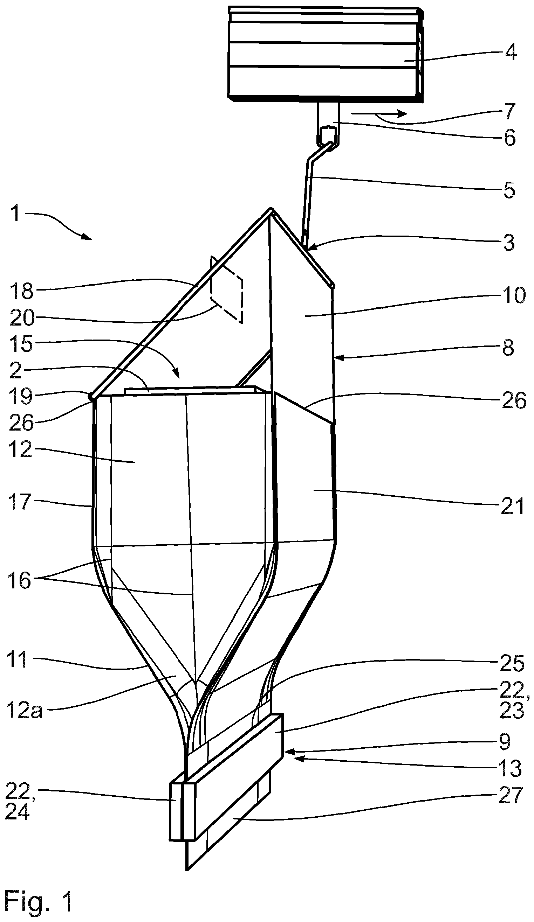

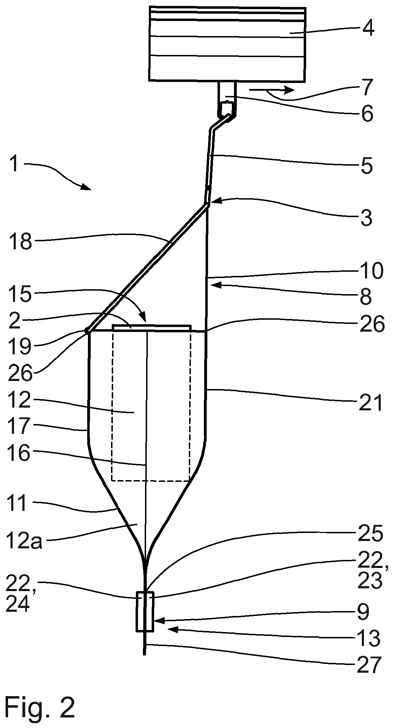

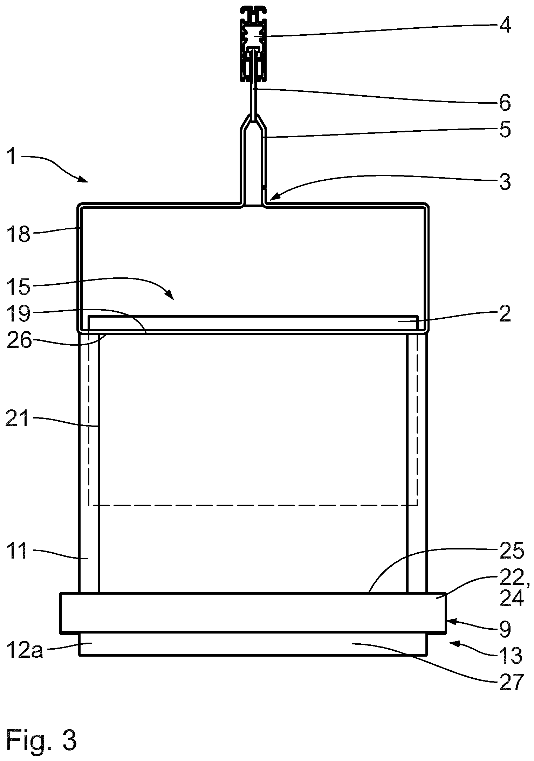

Nachfolgend ist anhand der Fig. 1 bis Fig. 5 ein Ausführungsbeispiel einer Tragvorrichtung 1 zum Aufnehmen von Waren 2 beschrieben. Die Tragvorrichtung 1 ist als Transporttasche ausgebildet und mittels einer Aufhängeeinrichtung 3 an einem Schienensystem 4 angebracht. Ein Transporthaken 5 der Aufhängeeinrichtung 3 greift hierzu in einen Rolladapter 6 des Schienensystems 4 ein. Der Rolladapter 6 ist entlang einer Transportrichtung 7 verschiebbar gelagert. Zum Transport der Tragvorrichtung 1 entlang des Schienensystems 4 steht der Rolladapter 6 mit einem nicht dargestellten Schienenantrieb des Schienensystems 4 in Verbindung.

Die Tragvorrichtung 1 weist eine Tragwand 8 und eine Verschlusseinrichtung 9 auf.

Die Tragwand 8 weist eine Vorderwand 10, eine Rückwand 11 sowie zwei Seitenwände 12 auf. Die Vorderwand 10, die Rückwand 11 und die Seitenwände 12 bilden einen schlauchförmigen Innensack 12a aus. Dieser schlauchförmige Innensack 12a ist in dem Offenzustand in einer Draufsicht rechteckförmig. Die Kontur des Innensacks 12a in der Draufsicht kann auch anders ausgeführt sein, insbesondere kreisförmig oder oval oder anders polygonförmig. Die Tragwand 8 ist in einem Verschlusszustand 13 und in einem Offenzustand 14 anordenbar. In dem Verschlusszustand 13 begrenzt die Tragwand 8 ein Tragvolumen 15 zum Aufnehmen der Waren 2 nach vorne, nach hinten, zu den Seiten und nach unten. In dem Offenzustand 14 gibt die Tragwand 8 das Tragvolumen 15 nach unten frei.

Die Tragwand 8, insbesondere die Vorderwand 10, die Rückwand 11 und die beiden Seitenwände 12, bestehen vollständig aus einem textilen Material. Die Tragwand 8 ist somit formflexibel ausgebildet.

Die beiden Seitenwände 12 sind faltbar ausgebildet. Die beiden Seitenwände 12 sind jeweils an der Vorderwand 10 und an der Rückwand 11 angebracht. Zum Verlagern der beiden Seitenwände 12 aus dem Offenzustand 14 in den Verschlusszustand 13 ist die jeweilige Seitenwand 12, insbesondere entlang einer Vertikalachse, faltbar. Eine Faltung 16 der Seitenwand 12 ist dabei derart ausgebildet, dass sich diese in Richtung des Tragvolumens 15, nach innen erstreckt. Dies wird durch eine nach innen gerichtete Vernähung 17 der jeweiligen Seitenwand 12 mit der Rückwand 11 und der Vorderwand 10 erreicht.

Die Tragwand 8 ist an der Aufhängeeinrichtung 3 angebracht. Hierzu weist die Aufhängeeinrichtung 3 einen Beladerahmen 18 auf. Der Beladerahmen 18 weist einen rechteckigen Grundriss auf. Der Beladerahmen 18 ist als rechteckförmig gebogener Draht ausgeführt. Mit dem Transporthaken 5 ist der Beladerahmen 18 starr verbunden. An einer vorderen Längsseite des Beladerahmens 18 ist die Vorderwand 10 angebracht. An einer hinteren Längsseite des Beladerahmens 18 ist die Rückwand 11 angebracht. Die Vorderwand 10 und die Rückwand 11 weisen zur Verbindung mit dem Beladerahmen 18 Verbindungsschlaufen 19 auf, durch die hindurch sich der Beladerahmen 18 erstreckt.

Der Beladerahmen 18 ist, insbesondere im aufgehängten Zustand der Tragvorrichtung 1, schräg zu einer Vertikalebene 20 angeordnet. Durch die schräge Anordnung des Beladerahmens 18 ist die Vorderwand 10 relativ zu der Rückwand 11, insbesondere im Bereich der Verbindungsschlaufen 19, beabstandet angeordnet.

Die Verschlusseinrichtung 9 umfasst zwei Lagermittel 21 und je ein an den beiden Lagermitteln 21 angebrachtes Schließmittel 22. Die beiden Schließmittel 22 sind zum reversiblen Verbinden der Vorderwand 10 mit der Rückwand 11 in dem Verschlusszustand 13 aneinander ankoppelbar ausgebildet. Die zwei Lagermittel 21 sind jeweils an der Tragwand 8 angebracht. Die beiden Lagermittel 21 sind an der Tragwand 8 im Bereich eines oberen Endes des Tragvolumens 15 angebracht.

Die beiden Lagermittel 21 sind aus einem textilen Material hergestellt. Somit sind die beiden Lagermittel 21 formflexibel, insbesondere biegeweich ausgebildet. Zur Anbringung des jeweiligen Lagermittels 21 mit der Tragwand 8 sind diese an jeweils einer Verbindungsstelle 26 miteinander vernäht. Alternativ, in einer Ausführungsform nicht gemäß der Erfindung, kann das Lagermittel 21 auch an dem Beladerahmen 18 angebracht sein. In diesem Fall wäre die Verbindungsstelle 26 an dem Beladerahmen 18 angeordnet.

Insbesondere ist jeweils eine Verbindungsstelle 26 für jedes der beiden Lagermittel 21 vorgesehen. Die Verbindungsstellen 26 sind insbesondere an der Vorderwand 10 bzw. an der Rückwand 11 jeweils in einem oberen, dem Beladerahmen 18 zugewandten Bereich angeordnet. Wesentlich ist, dass die Verbindungsstellen 26 einen Mindestabstand zu der jeweiligen Unterkante der Schließmittel 22 derart aufweisen, dass die Schließmittel 22 mit ausreichendem Abstand von der Tragwand 8 in dem Offenzustand anordenbar sind. Der Mindestabstand der Verbindungsstelle 26 beträgt insbesondere mindestens 5 mm, insbesondere mindestens 10 mm, insbesondere mindestens 20 mm, insbesondere mindestens 50 mm und insbesondere mindestens 100 mm und insbesondere mindestens 200 mm.

Die beiden Lagermittel 21 erstrecken sich über die gesamte vertikale Abmessung des Tragvolumens 15. Die beiden Lagermittel 21 weisen jeweils eine Lagerlänge L zwischen dem jeweiligen Schließmittel 22 und ihrer Befestigung an der Tragwand 8 auf. Die beiden Schließmittel 22 sind über das jeweilige Lagermittel 21 einseitig an der Tragwand 8 angebracht. Die beiden Schließmittel 22 sind somit in dem Offenzustand 14 mit einem Abstand zu der Tragwand 8 anordenbar gelagert. Der Abstand entspricht der Lagerlänge L.

Das in Transportrichtung 7 vordere Schließmittel 22 ist in Form einer Vorder-Schließleiste 23 ausgebildet. Das in Transportrichtung 7 hintere Schließmittel 22 ist in Form einer Hinter-Schließleiste 24 ausgebildet. Zum Verbinden der Vorderwand 10 mit der Rückwand 11 in dem Verschlusszustand 13 sind die Vorder-Schließleiste 23 und die Hinter-Schließleiste 24 reversibel aneinander befestigbar. Die Tragwand 8, insbesondere die Vorderwand 10 und die Rückwand 11, ist in dem Verschlusszustand 13 zwischen der Vorder-Schließleiste 23 und der Hinter-Schließleiste 24 angeordnet. Die Vorderwand 10 und die Rückwand 11 sind dabei miteinander verklemmt, wodurch das Tragvolumen 15 nach unten begrenzt ist.

Die Vorder-Schließleiste 23 und die Hinter-Schließleiste 24 sind außerhalb eines seitlichen Randes der Tragwand 8 aneinander befestigbar. Hierzu stehen die Vorder-Schließleiste 23 und die Hinter-Schließleiste 24 der Tragwand 8 seitlich über. Ein nicht dargestelltes Schließleisten-Verbindungsmittel zum Verbinden der Vorder-Schließleiste 23 mit der Hinter-Schließleiste 24 ist außerhalb des seitlichen Randes der Tragwand 8 angeordnet.

Die Vorder-Schließleiste 23 und die Hinter-Schließleiste 24 weisen je eine Schließkante 25 zum Verklemmen der Vorderwand 10 mit der Rückwand 11 auf. Die Tragwand 8 überragt die beiden Schließkanten 25 der Schließmittel 22 mit einem Überstandsabschnitt 27 nach unten. Insbesondere überragt die Tragwand 8 die beiden Schließmittel 22 nach unten. Das Verschließen der Tragwand 8 mit den Schließmitteln 22 ist unkompliziert. Insbesondere muss die exakte Länge der Tragwand 8 nicht an die Position der Schließmittel 22 angepasst werden, die von der Länge der Lagermittel 21 und/oder der Anordnung der Verbindungsstellen 26 abhängt.

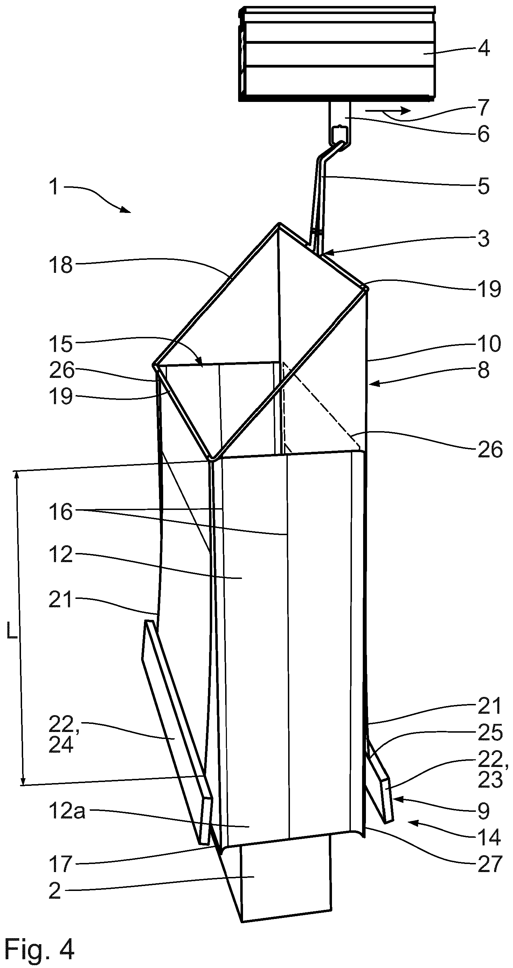

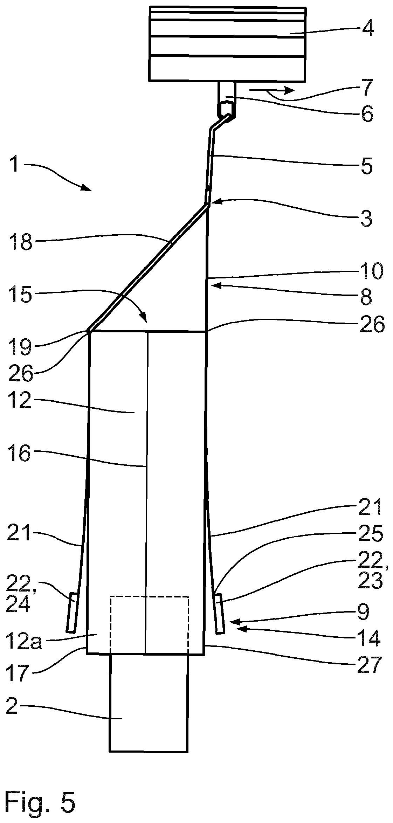

In den Fig. 4 und Fig. 5 ist die Tragvorrichtung in dem Offenzustand 14 dargestellt. Die Verbindung zwischen der Vorder-Schließleiste 23 und der Hinter-Schließleiste 24 ist gelöst und die Tragwand 8 gibt das Tragvolumen 15 nach unten frei. Die oberhalb der jeweiligen Schließkanten 25 an der Tragwand 8 angebrachten Lagermittel 21 gewährleisten eine beabstandete Anordnung der Schließmittel 22 zu der Tragwand 8 in dem Offenzustand 14. Die beiden Seitenwände 12 sind über deren gesamte vertikale Höhe entspannt und die Faltungen 16 sind geglättet.

Die Funktionsweise der Tragvorrichtung 1 zum Aufnehmen der Waren 2 ist wie folgt:
Die Tragvorrichtung 1 befindet sich in dem Verschlusszustand 13 und ist mit einer Ware 2 beladen. Die Vorder-Schließleiste 23 und die Hinter-Schließleiste 24 sind über das Schließleisten-Verbindungsmittel aneinander angebracht. Über die Schließkanten 25 der Vorder-Schließleiste 23 und der Hinter-Schließleiste 24 ist die Vorderwand 10 mit der Rückwand 11 verklemmt. In dem Tragvolumen 15 ist die Ware 2 angeordnet.

Über den Schienenantrieb wird der Rolladapter 6 entlang des Schienensystems 4 verlagert. Die über den Transporthaken 5 an dem Rolladapter 6 aufgehängte Tragvorrichtung 1 wird zu einer nicht dargestellten Entladestation transportiert. In der Entladestation wird das Schließleisten-Verbindungsmittel über ein nicht dargestelltes Betätigungsmittel in eine Offenstellung verlagert, wobei die Verbindung zwischen der Vorder-Schließleiste 23 und der Hinter-Schließleiste 24 gelöst wird. Die Klemmung der zwischen der Vorder-Schließleiste 23 und der Hinter-Schließleiste 24 angeordneten Tragwand 8 wird gelöst.

Unterstützt durch das Gewicht der Waren 2 entfernen sich die Vorder-Schließleiste 23 von der Hinter-Schließleiste 24 sowie die Vorderwand 10 von der Rückwand 11. Die Tragwand 8 gibt das Tragvolumen 15 nach unten frei und befindet sich in dem Offenzustand 14.

Die Ware 2 fällt schwerkraftbedingt nach unten aus der Tragvorrichtung 1 heraus, wobei sich die Schließmittel 22 von der Tragwand 8 entfernen können. Die Schließmittel 22 können entlang der Transportrichtung 7 und der entgegen der Transportrichtung 7 flexibel ausweichen. Insbesondere sind die Schließmittel 22 im Wesentlichen unabhängig von der Tragwand 8 in und entgegen der Transportrichtung 7 verlagerbar. Ein Verkanten der Ware 2 zwischen der Tragwand 8 und einer der Schließkanten 25 der geöffneten Verschlusseinrichtung 9 wird somit verhindert.

Mittels eines nicht dargestellten Schließsystems werden die Vorder-Schließleiste 23 und die Hinter-Schließleiste 24 aneinander herangeführt, wobei die Tragwand 8 zwischen den jeweiligen Schließkanten 25 verklemmt wird. Das Schließleisten-Verbindungsmittel wird in eine Verschlussstellung überführt und die Vorder-Schließleiste 23 ist an der Hinter-Schließleiste 24 befestigt. Die Tragwand 8 befindet sich in dem Verschlusszustand 13.

Mittels des Schienenantriebs wird die Tragvorrichtung 1 entlang der Transportrichtung 7 in eine nicht dargestellte Beladestation transportiert. In der Beladestation wird die Tragvorrichtung 1 mit einer Ware 2 oder mehreren Waren 2 bestückt. Hierzu werden die Waren 2 durch den Beladerahmen 18 in das Tragvolumen 15 eingebracht. Insbesondere wird die Tragvorrichtung 1 mit genau einer Ware 2 bestückt. Die Transportvorrichtung 1 dient insbesondere für den Transport von Einzelwaren.

Die Tragvorrichtung 1 kann zum Transport der Waren 2 wieder zu der Entladestation transportiert werden.

Dadurch, dass die beiden Schließmittel 22 über die beiden Lagermittel 21 an der Tragwand 8 angebracht sind, wird gewährleistet, dass die Schließmittel 22 in dem Offenzustand 14 beabstandet zu der Tragwand 8 anordenbar sind. Die Tragwand 8 kann hierdurch sicher in dem Verschlusszustand 13 gehalten werden, wobei die Freigabe der Waren 2 aus dem Tragvolumen 15 besonders zuverlässig erfolgt. Ein Verkanten der Waren 2 zwischen der Tragwand 8 und einer Schließkante 25 eines geöffneten Schließmittels 22 kann hierdurch zuverlässig verhindert werden. Die Tragvorrichtung 1 ist somit im Betrieb besonders robust und wirtschaftlich.

## Patentansprüche

1. Tragvorrichtung (1) zum Aufnehmen von Waren (2), umfassend
- eine Aufhängeeinrichtung (3) zum Anbinden an ein Schienensystem (4),
- eine an der Aufhängeeinrichtung (3) angebrachte Tragwand (8), welche
-- eine Vorderwand (10) und eine Rückwand (11) aufweist,
-- zwischen einem Verschlusszustand (13) und einem Offenzustand (14) anordenbar ist,
-- in dem Verschlusszustand (13) ein Tragvolumen (15) zum Aufnehmen der Waren (2) zumindest teilweise nach vorne, nach unten und nach hinten begrenzt, und
-- in dem Offenzustand (14) das Tragvolumen (15) nach unten freigibt, und
- eine Verschlusseinrichtung (9) mit
-- mindestens einem Schließmittel (22) zum reversiblen Verbinden der Vorderwand (10) mit der Rückwand (11) in dem Verschlusszustand (13), wobei das mindestens eine Schließmittel (22) in dem Offenzustand (14) beabstandet zu der Tragwand (8) anordenbar ist,
- wobei das mindestens eine Schließmittel (22) eine Vorder-Schließleiste (23) und eine Hinter-Schließleiste (24) umfasst,
- wobei die Verschlusseinrichtung (9) mindestens ein mit der Tragwand (8) verbundenes Lagermittel (21) umfasst, an dem das mindestens eine Schließmittel (22) angebracht ist,
**dadurch gekennzeichnet, dass**
die Vorder-Schließleiste (23) und die Hinter-Schließleiste (24) zum Verbinden der Vorderwand (10) mit der Rückwand (11) außerhalb eines seitlichen Randes der Tragwand (8) aneinander befestigbar sind.

2. Tragvorrichtung (1) nach Anspruch 1, **dadurch gekennzeichnet, dass** das mindestens eine Lagermittel (21) zumindest bereichsweise formflexibel ausgebildet ist.

3. Tragvorrichtung (1) nach Anspruch 1 oder 2, **dadurch gekennzeichnet, dass** das mindestens eine Lagermittel (21) an der Tragwand (8) und/oder an einem Beladerahmen (18) der Tragvorrichtung (1) angebracht ist.

4. Tragvorrichtung (1) nach einem der vorstehenden Ansprüche, **dadurch gekennzeichnet, dass** das mindestens eine Lagermittel (21) oberhalb jeweils einer Schließkante (25) des mindestens einen Schließmittels (22) an der Tragwand (8) angebracht ist.

5. Tragvorrichtung (1) nach einem der vorstehenden Ansprüche, **dadurch gekennzeichnet, dass die** Tragwand (8) mindestens eine Schließkante (25) des mindestens einen Schließmittels (22) nach unten überragt.

6. Tragvorrichtung (1) nach einem der vorstehenden Ansprüche, **dadurch gekennzeichnet, dass** die Tragwand (8) mindestens eine Seitenwand (12) umfasst, welche das Tragvolumen (15) zumindest teilweise seitlich begrenzt.

7. Tragvorrichtung (1) nach einem der vorstehenden Ansprüche, **dadurch gekennzeichnet, dass** die Tragwand (8) zumindest abschnittsweise als schlauchförmiger Innensack (12a) ausgebildet ist.

8. Tragvorrichtung (1) nach einem der vorstehenden Ansprüche, **gekennzeichnet durch einen** Beladerahmen (18) zum beabstandeten Anordnen der Vorderwand (10) relativ zu der Rückwand (11), welcher im aufgehängten Zustand der Tragvorrichtung (1) schräg zu einer Vertikalebene (20) angeordnet ist.

9. Tragvorrichtung (1) nach Anspruch 8, **dadurch gekennzeichnet, dass** die mindestens eine Seitenwand (12) eine definierte Faltung aufweist.

## Claims

1. Carrying device (1) for receiving goods (2), comprising
- a suspension device (3) for linkage to a rail system (4),
- a carrying wall (8) attached to the suspension device (3), which
-- has a front wall (10) and a rear wall (11),
-- is arrangeable between a closed state (13) and an open state (14),
-- delimits a carrying volume (15) for receiving the goods (2) to the front, bottom and rear at least partially in the closed state (13), and
-- opens up the carrying volume (15) in the downward direction in the open state (14), and
- a closing device (9) having
-- at least one closing means (22) for releasably connecting the front wall (10) to the rear wall (11) in the closed state (13), wherein the at least one closing means (22), in the open state (14), is arrangeable at a spacing from the carrying wall (8),
- wherein the at least one closing means (22) comprises a front closing strip (23) and a rear closing strip (24), and
- wherein the closing device (9) comprises at least one bearing means (21), which is connected to the carrying wall (8) and to which is attached the at least one closing means (22),
**characterized in that**
the front closing strip (23) and the rear closing strip (24) are fastenable to one another outside a lateral border of the carrying wall (8) in order to connect the front wall (10) to the rear wall (11).

2. Carrying device (1) according to Claim 1, **characterized in that** the at least one bearing means (21) is configured such that, at least in some areas, it is flexible in shape.

3. Carrying device (1) according to Claim 1 or 2, **characterized in that** the at least one bearing means (21) is attached to the carrying wall (8) and/or to a loading frame (18) of the carrying device (1).

4. Carrying device (1) according to one of the preceeding Claims,
**characterized in that** the at least one bearing means (21) is attached to the carrying wall (8) above a corresponding closing edge (25) of the at least one closing means (22).

5. Carrying device (1) according to one of the preceeding Claims,
**characterized in that** the carrying wall (8) projects downwards beyond at least one closing edge (25) of the at least one closing means (22).

6. Carrying device (1) according to one of the preceeding Claims,
**characterized in that** the carrying wall (8) comprises at least one side wall (12), which laterally delimits the carrying volume (15) at least partially.

7. Carrying device (1) according to one of the preceeding Claims,
**characterized in that** the carrying wall (8) is configured as a tubular inner bag (12a) at least in sections.

8. Carrying device (1) according to one of the preceeding Claims,
**characterized by** a loading frame (18) for arranging the front wall (10) at spacing from the rear wall (11), said loading frame (18), in a suspended state of the carrying device (1), being arranged obliquely to a vertical plane (20).

9. Carrying device (1) according to Claim 8, **characterized in that** the at least one side wall (12) has a defined folding.

## Revendications

1. Dispositif porteur (1) destiné à recevoir des marchandises (2), comprenant
- un moyen de suspension (3) destiné à être raccordée à un système de rail (4),
- une paroi portante (8), montée sur le moyen de suspension (3), qui
-- présente une paroi avant (10) et une paroi arrière (11),
-- peut être agencée entre un état fermé (13) et un état ouvert (14),
-- limite, à l'état fermé (13), un volume porteur (15) destiné à recevoir les marchandises (2) au moins en partie vers l'avant, vers le bas et vers l'arrière et
-- libère, à l'état ouvert (14), le volume porteur (15) vers le bas, et
- un moyen de fermeture (9) comportant
-- au moins un moyen de fermeture (22) destiné à relier de manière réversible la paroi avant (10) à la paroi arrière (11) à l'état fermé (13), l'au moins un moyen de fermeture (22) pouvant être agencé, à l'état ouvert (14), à distance de la paroi portante (8),
- dans lequel l'au moins un moyen de fermeture (22) comprend une barre de fermeture avant (23) et une barre de fermeture arrière (24),
- dans lequel le moyen de fermeture (9) comprend au moins un moyen de support (21) relié à la paroi portante (8), sur lequel l'au moins un moyen de fermeture (22) est monté,
**caractérisé en ce que**
la barre de fermeture avant (23) et la barre de fermeture arrière (24) peuvent être fixées l'une à l'autre pour relier la paroi avant (10) à la paroi arrière (11) en dehors du bord latéral de la paroi portante (8).

2. Dispositif porteur (1) selon la revendication 1, **caractérisé en ce que** l'au moins un moyen de support (21) est réalisé au moins par endroits à flexibilité de forme.

3. Dispositif porteur (1) selon la revendication 1 ou 2, **caractérisé en ce que** l'au moins un moyen de support (21) est monté sur la paroi portante (8) et/ou sur un cadre de chargement (18) du dispositif porteur (1).

4. Dispositif porteur (1) selon l'une des revendications précédentes, **caractérisé en ce que** l'au moins un moyen de support (21) est monté sur la paroi portante (8) au-dessus d'une arrête de fermeture (25) respective de l'au moins un moyen de fermeture (22).

5. Dispositif porteur (1) selon l'une des revendications précédentes, **caractérisé en ce que** la paroi portante (8) dépasse par le bas d'au moins une arrête de fermeture (25) de l'au moins un moyen de fermeture (22).

6. Dispositif porteur (1) selon l'une des revendications précédentes, **caractérisé en ce que** la paroi portante (8) comprend au moins une paroi latérale (12), qui limite le volume porteur (15) au moins en partie sur le côté.

7. Dispositif porteur (1) selon l'une des revendications précédentes, **caractérisé en ce que** la paroi portante (8) est réalisée au moins sur certaines parties sous la forme d'un sac intérieur (12a) tubulaire.

8. Dispositif porteur (1) selon l'une des revendications précédentes, **caractérisé par** un cadre de chargement (18) destiné à agencer la paroi avant (10) à distance de la paroi arrière (10), ledit cadre de chargement étant, à l'état suspendu du dispositif porteur (1), agencé de manière oblique par rapport à un plan vertical (20).

9. Dispositif porteur (1) selon la revendication 8, **caractérisé en ce que** l'au moins une paroi latérale (12) présente un pliage défini.
